# EUROPÄISCHE PATENTANMELDUNG

(11) **EP 4 272 851 A1**
(43) Veröffentlichungstag der Anmeldung: **08.11.2023**
(21) Anmeldenummer: 23157522.6
(22) Anmeldetag: 20.02.2023
(51) Int. Cl.: B01D 1/14, B01D 1/22, F26B 17/00, F26B 17/28

(54) **TROCKNUNGSVORRICHTUNG**

(30) Priorität: 06.05.2022 DE 202022102484 U
(71) Anmelder: Fliegl Agrartechnik GmbH, 84453 Mühldorf am Inn (DE)
(72) Erfinder: FLIEGL jun., Josef, 84453 Mühldorf am Inn (DE)
(74) Vertreter: Tetzner, Michael

(57) **Zusammenfassung**

Die erfindungsgemäße Trocknungsvorrichtung für eine Mischung aus einer Flüssigkeit und einem oder mehreren Feststoffen weist ein Gestell, einen im Gestell angeordneten Aufnahmebehälter mit einem Einlass und einem Auslass für die Mischung sowie einen am Gestell rotierbar gelagerten und mit einem Abschnitt seines Umfangs in dem Aufnahmebehälter angeordneten Rotor auf, der mit einer Mehrzahl von flächigen Mitnahmeelementen versehen ist. Der Rotor wird über eine Antriebsvorrichtung um eine Rotorachse rotierend angetrieben. Weiterhin ist eine außerhalb des Aufnahmebehälters angeordnete und mit dem Aufnahmebehälter in Verbindung stehende Spülleitung zum Zirkulieren der Mischung vorgesehen.

## Beschreibung

Die Erfindung betrifft eine Trocknungsvorrichtung für eine Mischung aus einer Flüssigkeit und einem oder mehreren Feststoffen.

Beispielsweise in der Landwirtschaft oder bei der Erzeugung von Biogas entstehen erhebliche Mengen von Mischungen aus Flüssigkeiten und Feststoffen, beispielsweise (Klär-)Schlamm, Gülle oder Gärreste, die transportiert, entsorgt und/oder verarbeitet werden müssen. Um insbesondere Transport- und Lagerungskosten für diese Mischungen möglichst gering zu halten, ist es bekannt, diese einzudicken, indem gezielt der Flüssigkeitsanteil in den Mischungen reduziert wird. Dies kann beispielsweise durch eine zumindest teilweise Verdunstung dieses Flüssigkeitsanteils erreicht werden.

Für eine Eindickung durch teilweise Verdunstung des Flüssigkeitsanteils einer Mischung kann beispielsweise eine gattungsgemäße Trocknungsvorrichtung genutzt werden, die einen Aufnahmebehälter zur Aufnahme der Mischung, einen mit einem Abschnitt seines Umfangs in dem Aufnahmebehälter angeordneten Rotor sowie eine Antriebsvorrichtung zum rotierenden Antreiben des Rotors umfasst. Eine solche Trocknungsvorrichtung ist beispielsweise aus der DE 10 2016 105 538 A1 bekannt. Bei der dortigen Trocknungsvorrichtung ist der Rotor mit einer Mehrzahl von flächigen Mitnahmelementen ausgestattet, die eine radiale oder eine zur Radialen geneigte Ausrichtung bezüglich der Rotationsachse des Rotors aufweisen, wobei zumindest einige und vorzugsweise sämtliche der Mitnahmeelemente mit einer Mehrzahl von Durchgangsöffnungen versehen sind. Infolge der Rotation des Rotors tauchen kontinuierlich einzelne der Mitnahmeelemente in die einzudickende Mischung ein und nehmen einen Teil davon mit, wobei die an den Mitnahmelementen hängende Mischung auf dem Abschnitt des Umfangs des Rotors, der nicht in die Mischung eingetaucht ist, einer erhöhten Verdunstungswirkung ausgesetzt ist, die auf die großflächige und dünnschichtige Verteilung auf den Mitnahmeelementen zurückzuführen ist. Erheblich unterstützt wird diese Verdunstungswirkung noch durch die Beaufschlagung der an den Mitnahmeelementen hängenden Mischung mit einem von einem Gebläse erzeugten Luftstrom, der zudem erhitzt sein kann.

In Abhängigkeit der zu trocknenden Mischung kann es jedoch zu unerwünschten Ablagerungen am Boden des Aufnahmebehälters kommen, die den Trocknungsbetrieb behindern oder gar blockieren, wenn die Sedimente den Behälter zunehmend füllen und in der Folge ein Drehen des Rotors verhindern. Außerdem erfordert eine vollständige Entleerung des Aufnahmebehälters durch etwaige Ablagerungen einen erhöhten Aufwand.

Der Erfindung liegt daher die Aufgabe zugrunde, den Betrieb und insbesondere die Entleerung des Aufnahmebehälters zu verbessern.

Diese Aufgabe wird mittels einer Trocknungsvorrichtung gemäß dem Anspruch 1 gelöst. Vorteilhafte Ausgestaltungen der erfindungsgemäßen Trocknungsvorrichtung sind Gegenstände der abhängigen Ansprüche und ergeben sich aus der nachfolgenden Beschreibung der Erfindung.

Die erfindungsgemäße Trocknungsvorrichtung für eine Mischung aus einer Flüssigkeit und einem oder mehreren Feststoffen weist ein Gestell, einen im Gestell angeordneten Aufnahmebehälter mit einem Einlass und einem Auslass für die Mischung sowie einen am Gestell rotierbar gelagerten und mit einem Abschnitt seines Umfangs in dem Aufnahmebehälter angeordneten Rotor auf, der mit einer Mehrzahl von flächigen Mitnahmeelementen versehen ist. Der Rotor wird über eine Antriebsvorrichtung um eine Rotationsachse rotierend angetrieben. Weiterhin ist eine außerhalb des Aufnahmebehälters angeordnete und mit dem Aufnahmebehälter in Verbindung stehende Spülleitung zum Zirkulieren der Mischung vorgesehen.

Durch das Zirkulieren der Mischung können etwaige sich im Aufnahmebehälter abgesetzte Sedimente/Ablagerungen aufgewirbelt und in der Schwebe gehalten werden. Dadurch wird eine effizientere Trocknung und eine gute Entleerung des Aufnahmebehälters begünstigt.

Weiterhin kann durch eine Ausgestaltung der Mitnahmeelemente mit einer Mehrzahl von Durchgangsöffnungen erreicht werden, dass die zur Trocknung der Mischung vorgesehene Gasströmung nicht nur die zwischen den Mitnahmeelementen ausgebildeten Zwischenräume sondern auch die Mitnahmeelemente selbst und dadurch auch die an diesen haftende Mischung durchströmen kann, wodurch ebenfalls im Vergleich zu nicht durchströmbaren Mitnahmeelementen die Trocknungswirkung der Trocknungsvorrichtung erheblich verbessert werden kann. Bezüglich der weiteren Ausgestaltungsmöglichkeiten des Rotors und der Mitnahmeelemente wird hiermit ausdrücklich auf DE 10 2016 105 538 A1 verwiesen.

Gemäß einer bevorzugten Ausgestaltung der Erfindung ist die Spülleitung über den Einlass und den Auslass des Aufnahmebehälters an den Aufnahmebehälter angeschlossen, wodurch zusätzliche Öffnungen im Aufnahmebehälter vermieden werden. Der Einlass und der Auslass sind zweckmäßigerweise im Bodenbereich des Aufnahmebehälters an zwei gegenüberliegenden Begrenzungswänden angeordnet, um eine möglichst vollständige Entleerung zu ermöglichen.

Um das Zirkulieren der Mischung über die Spülleitung zu unterstützen ist an der Spülleitung vorzugsweise im Bereich des Auslasses eine Spülpumpe zum Zirkulieren der Mischung angeschlossen.

Weiterhin können am Einlass ein Einlassstutzen zum Zuführen der Mischung in den Aufnahmebehälter und am Auslass ein Auslassstutzen zum Abführen der Mischung aus dem Aufnahmebehälter vorgesehen werden, wobei die Spülleitung vorzugsweise im Bereich des Auslassstutzen abzweigt und im Bereich des Einlassstutzen wieder einmündet. Dabei sind Einlassstutzen in Zuführrichtung der Mischung vor der Einmündung der Spülleitung mit einem ersten Absperrorgan und der Auslassstutzen in Abführrichtung der Mischung nach der Abzweigung der Spülleitung mit einem zweiten Absperrorgan versehen. Zum Befüllen des Aufnahmebehälters wird das erste Absperrorgan geöffnet und das zweite Absperrorgan geschlossen. Nach dem Befüllen befinden sich dann beide Absperrorgane in ihrer Schließstellung. Durch Betätigung der Spülpumpe kann dann eine Zirkulation der Mischung über die Spülleitung erfolgen. Auf diese Weise werden etwaige Sedimente/Ablagerungen am Boden des Aufnahmebehälters immer wieder mitgerissen und in der Mischung in der Schwebe gehalten, wodurch deren Trocknung ermöglich wird.

Zum Entleeren des Aufnahmebehälters wird das zweite Absperrorgan am Auslass geöffnet und eine Entleerungspumpe betätigt. Es ist auch denkbar, dass zu einem bestimmten Zeitpunkt des Entleerungsprozesses auch das erste Absperrorgan geöffnet wird, sodass das Abführen einer bereits getrockneten Charge der Mischung aus dem Aufnahmebehälter auch durch ein gleichzeitiges Zuführen einer neuen Charge unterstützt wird.

Gemäß einer weiteren Ausgestaltung der Erfindung ist ferner eine Steuereinheit vorgesehen, die mit der Entleerungspumpe und der Spülpumpe in Verbindung steht, wobei die Steuereinheit beim Entleeren des Aufnahmebehälters bzw. Abführen der Mischung aus dem Aufnahmebehälter zum gleichzeitigen Betrieb der Entleerungspumpe und der Spülpumpe ausgebildet ist. Auf diese Weise können etwaige Sedimente/Ablagerung vom Boden angehoben werden, sodass eine besonders effiziente Entleerung ermöglicht wird.

Die Erfindung wird nachfolgend anhand eines in den Zeichnungen dargestellten Ausführungsbeispiels näher erläutert. In den Zeichnungen zeigt:
- Fig. 1:: die erfindungsgemäße Trocknungsvorrichtung in einer Ansicht von der Seite;
- Fig. 2:: die Trocknungsvorrichtung in einer Ansicht von hinten;
- Fig. 3:: die Trocknungsvorrichtung in einer ersten perspektivischen Ansicht;
- Fig. 4:: die Trocknungsvorrichtung in einer zweiten perspektivischen Ansicht und
- Fig. 5:: die Spülleitung mit den Absperrorganen in einer perspektivischen Ansicht.

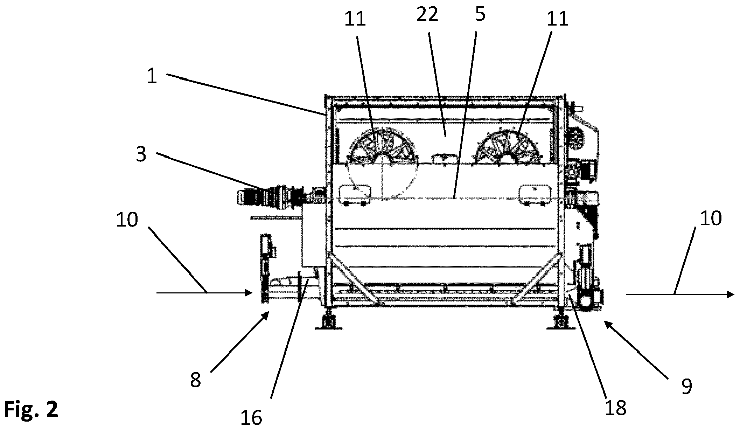

Die in den Zeichnungen dargestellte Trocknungsvorrichtung umfasst ein Gestell 1, innerhalb dessen ein Rotor 2 drehbar gelagert ist. Ein rotierender Antrieb des Rotors 2 kann mittels einer Antriebsvorrichtung 3 (vgl. Fig. 2) erfolgen, die beispielsweise einen Elektromotor umfassen kann, der direkt oder unter Zwischenschaltung eines Übersetzungsgetriebes auf eine zentrale Antriebswelle 4, deren Längsachse der Rotationsachse 5 des Rotors 2 entspricht, wirken kann.

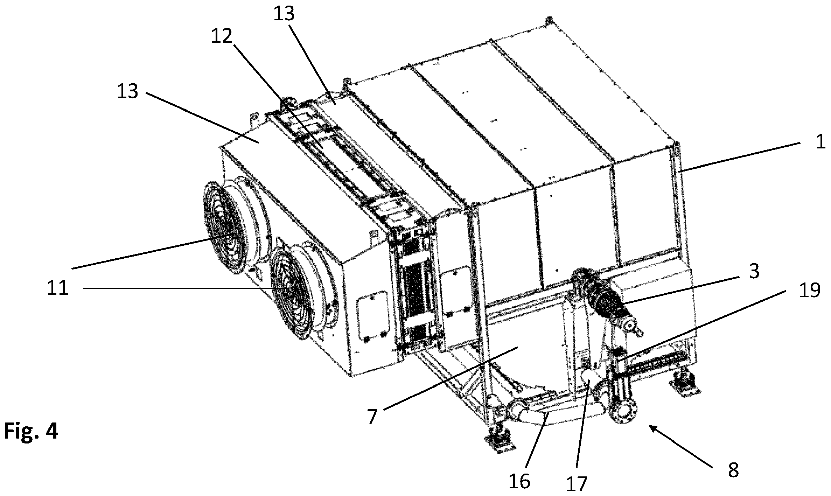

Das Gestell 1 integriert weiterhin einen Aufnahmebehälter 6, der einen halbschalenförmigen Behältermantel 6a aufweist, dessen zwei (längsaxiale) Enden mittels Begrenzungswänden 7 verschlossen sind (Fig. 4). Der Aufnahmebehälter 6 ist unterhalb (bezogen auf die Schwerkraftrichtung in einer vorgesehenen Betriebsstellung der Trocknungsvorrichtung) des Rotors 2 positioniert, wobei der Rotor 2 teilweise, vorzugsweise etwa zur Hälfte innerhalb des Aufnahmebehälters 6 angeordnet ist.

Das von dem Aufnahmebehälter 6 begrenzte Innenvolumen ist fluidleitend mit einem Einlass 8 und einen Auslass 9 verbunden, über die eine Mischung 10 aus einer Flüssigkeit und einem oder mehreren Feststoffen zu- und abgeführt werden kann. Der Einlass 8 dient dem Zuführen neuer, noch einzudickender Mischung 10, während die mittels der erfindungsgemäßen Trocknungsvorrichtung eingedickte Mischung 10 über den Auslass 9 abgeführt werden kann (Fig.2). Der Einlass 8 und der Auslass 9 sind dabei entlang der Rotationsachse 5 des Rotors 2 voneinander beabstandet und sich gegenüberliegend in den Begrenzungswänden 7 des Aufnahmebehälters 6 integriert. Zum Zu- und Abführen der Mischung 10 können ein oder mehrere (nicht dargestellte) Pumpen beziehungsweise Fördervorrichtungen vorgesehen sein.

An einer Seite des Gestells 1 ist auf Höhe des außerhalb des Aufnahmebehälters 6 befindlichen Abschnitts des Rotors 2 eine Vorrichtung an dem Gestell 1 befestigt, die eine Mehrzahl von Gebläsen 11 (hier konkret zwei) sowie einen Wärmetauscher 12 umfasst. Mittels der Gebläse 11, die beispielsweise elektromotorisch angetrieben sein können, kann eine Luftströmung erzeugt werden, die in etwa senkrecht bezüglich der Rotationsachse 5 des Rotors 2 ausgerichtet ist und somit den außerhalb des Aufnahmebehälters 5 befindlichen Abschnitt des Rotors 2 quer zu dessen Rotationsachse 5 durchströmt und auf der Rückseite (Fig.2) über eine Öffnung 22 abgeführt wird. Dabei durchströmt die Luftströmung zuvor noch den Wärmetauscher 12, wodurch diese durch einen Übergang von Wärmeenergie von einem innerhalb des Wärmetauschers 12 geführten und beispielsweise von einer Umwälzpumpe (nicht dargestellt) durch den Wärmetauscher 12 geförderten Wärmetauschermedium erwärmt wird. Um eine möglichst gerichtete Durchströmung des Rotors 2 zu erreichen, umfasst die Vorrichtung zudem ein Gehäuse 13, das nicht nur eine Befestigung der Vorrichtung an dem Gestell 1 und eine feste Positionierung der Gebläse 11 und des Wärmetauschers 12 zueinander sicherstellt, sondern auch eine strömungsleitende Funktionalität aufweist.

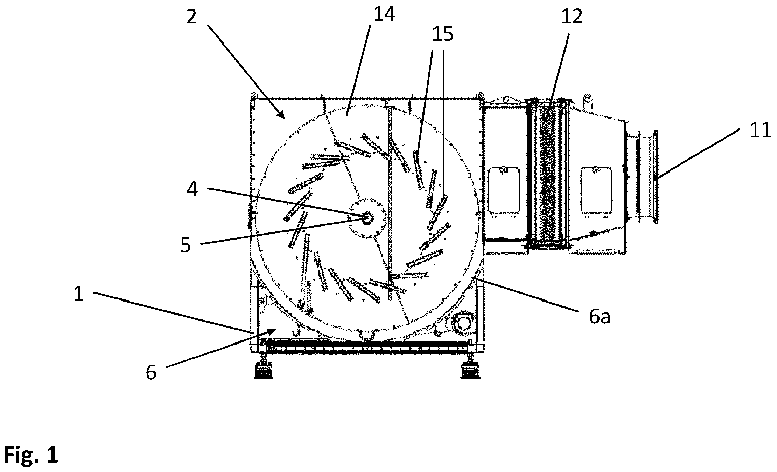

Der Rotor 2 umfasst zwei Stirnwände 14, die ein Innenvolumen des Rotors 2 stirnseitig begrenzen und die mittels einer Mehrzahl von in gleichmäßiger Teilung über dem Außenumfang des Rotors 2 verteilten, plattenförmigen Mitnahmeelementen 15, die bezüglich der Rotationsachse 5 in Drehrichtung des Rotors 2 zur Radialen geneigt ausgerichtet sind (vgl. insbesondere Fig. 1), miteinander verbunden sind. Die plattenförmigen Mitnahmeelemente weisen dabei vorzugsweise eine ebene, d.h. nicht gekrümmte Ausgestaltung auf.

Durch die vergleichsweise große Gesamtfläche, die von den plattenförmigen Mitnahmeelementen 15 in Summe ausgebildet wird und die für ein Mitnehmen der einzudickenden Mischung 10 zur Verfügung steht sowie von der Luftströmung umströmt werden, kann eine entsprechend gute Trocknungs- beziehungsweise Verdunstungswirkung für den Flüssigkeitsanteil der Mischung 10 erzielt werden.

Im Betrieb der Trocknungsvorrichtung wird der Rotor 2 mittels der Antriebsvorrichtung 3 rotierend angetrieben, wodurch kontinuierlich ein anderer Abschnitt des Rotors 2 in die innerhalb des Aufnahmebehälters 6 aufgenommene Mischung 10 eingetaucht wird und die so mit der Mischung 10 benetzten Mitnahmeelemente 15 anschließend entlang des nicht in dem Aufnahmebehälter 6 befindlichen Abschnitts des Umfangs des Rotors 2 bewegt werden, wobei diese mittels der erwärmten Luftströmung um- und durchströmt werden, wodurch ein Anteil der Flüssigkeit in der Mischung 10 verdunstet. Dadurch wird die gewünschte Eindickung der innerhalb des Aufnahmebehälters 6 enthaltenen Charge der Mischung 10 erreicht.

Dies erfolgt solange, bis die in dem Aufnahmebehälter 6 enthaltene Charge der Mischung 10 eine definierte Konsistenz beziehungsweise Viskosität erreicht hat. Dann kann die entsprechende Charge der Mischung 10 über den Auslass 9 aus dem Aufnahmebehälter 6 abgeführt und eine neue Charge über den Einlass 8 zugeführt werden, die dann in entsprechender Weise durch einen Betrieb der Trocknungsvorrichtung eingedickt werden kann.

Die Ermittlung der zu erreichenden Konsistenz beziehungsweise Viskosität der Mischung 10 kann beispielsweise durch ein Unterschreiten einer definierten Füllhöhe der Mischung 10 innerhalb des Aufnahmebehälters 6 ermittelt werden. Zur Ermittlung der Füllhöhe kann die Trocknungsvorrichtung eine entsprechende (nicht dargestellte) Füllstandsmesseinrichtung, die beispielsweise eine Radarvorrichtung umfassen kann, aufweisen. Eine Ermittlung der Füllhöhe beziehungsweise der zu erreichenden Konsistenz kann alternativ oder zusätzlich auf einem Wiegen des Aufnahmebehälters 6 oder der in dem Aufnahmebehälter 6 enthaltenen Mischung 10 beruhen. Der Betrieb der Trocknungsvorrichtung einschließlich des Zu- und Abführens der verschiedenen Chargen der Mischung 10 und gegebenenfalls einer Unterbrechung des rotierenden Antriebs des Rotors 2 während des Chargenwechsels kann dadurch automatisiert ablaufen.

Die in dem Wärmetauscher 12 auf die Luftströmung übertragene Wärmeenergie stellt vorzugsweise Abwärme aus einem weiterhin bevorzugt in der Nähe der Trocknungsvorrichtung durchgeführten exothermen Prozess, wie beispielsweise der eine Verbrennung von Biogas oder einem anderen Brennstoff zur Strom- und/oder Wärmeerzeugung, dar.

Mittels einer erfindungsgemäßen Trocknungsvorrichtung, wie sie beispielsweise in den Zeichnungen dargestellt ist, kann eine Trocknungsleistung von einem Liter Wasser je Kilowattstunde Wärmeenergie und mehr erreicht werden.

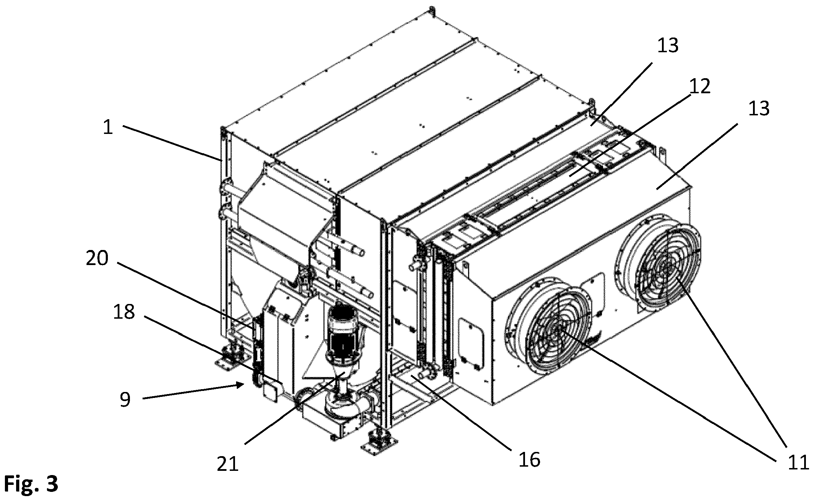

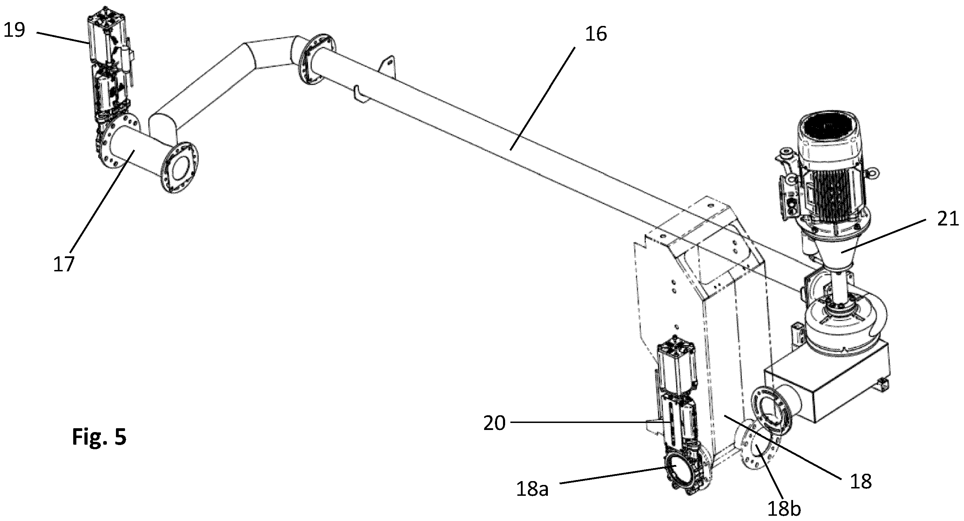

Die oben beschriebene Trocknungsvorrichtung weist darüber hinaus eine außerhalb des Aufnahmebehälters 6 angeordnete und mit dem Aufnahmebehälter 6 in Verbindung stehende Spülleitung 16 zum Zirkulieren der Mischung 10 auf, die in Fig. 5 isoliert und in den Fig. 2, 3 und 4 im eingebauten Zustand dargestellt ist. Die Spülleitung 16 steht dabei über den Einlass 8 und den Auslass 9 des Aufnahmebehälters 6 mit dem Aufnahmebehälter 6 in Verbindung.

Dazu sind am Einlass 8 ein Einlassstutzen 17 zum Zuführen der Mischung 10 in den Aufnahmebehälter 6 und am Auslass 9 ein Auslassstutzen 18 zum Abführen der Mischung aus dem Aufnahmebehälter 6 vorgesehen, wobei die Spülleitung 16 im Bereich des Auslassstutzen 18 abzweigt und im Bereich des Einlassstutzen 17 wieder einmündet. Der Einlassstutzen 17 wirkt in Zuführrichtung der Mischung 10 vor der Einmündung der Spülleitung 16 mit einem ersten Absperrorgan 19 und der Auslassstutzen 18 in Abführrichtung der Mischung 10 nach der Abzweigung der Spülleitung 16 mit einem zweiten Absperrorgan 20 zusammen. Die beiden Absperrorgane 19, 20 sind beispielsweise als Plattenschieber ausgebildet. Der Auslassstutzen 18 ist in Fig. 5 kastenartig ausgebildet und gestrichelt dargestellt. In diesem Ausführungsbeispiel weist der Auslassstutzen 18 eine erste Auslassöffnung 18a auf, die mit dem zweiten Absperrorgan 20 zusammenwirkt. Je nach den vorhandenen Platzmöglichkeiten könnte aber stattdessen auch eine um 90° versetzte Auslassöffnung 18b zum Einsatz kommen, an der dann das zweite Absperrorgan zu montieren wäre, während die jeweils nicht verwendete Auslassöffnung in geeigneter Weise verschlossen wird.

In die Spülleitung ist vorzugsweise in der Nähe des Auslassstutzens 18 eine Spülpumpe 21 zum Zirkulieren der Mischung 10 integriert, die im dargestellten Ausführungsbeispiel als senkrecht eingebaute Güllepumpe ausgebildet ist.

Zum Befüllen des Aufnahmebehälters 6 wird das erste Absperrorgan 19 geöffnet und das zweite Absperrorgan 20 geschlossen. Nach dem Befüllen befinden sich dann beide Absperrorgane in ihrer Schließstellung. Durch Betätigung der Spülpumpe 21 kann dann eine Zirkulation der Mischung über die Spülleitung 16 erfolgen. Auf diese Weise werden etwaige Sedimente/Ablagerungen am Boden des Aufnahmebehälters 6 immer wieder mitgerissen und in der Mischung 10 in der Schwebe gehalten, wodurch deren Trocknung ermöglich wird.

Zum Entleeren des Aufnahmebehälters 6 wird das zweite Absperrorgan 20 am Auslass 9 geöffnet und eine nicht dargestellte Entleerungspumpe betätigt. Es ist aber auch denkbar, dass zu einem bestimmten Zeitpunkt des Entleerungsprozesses auch das erste Absperrorgan 20 geöffnet wird, sodass das Abführen einer bereits getrockneten Charge der Mischung 10 aus dem Aufnahmebehälter 6 durch ein gleichzeitiges Zuführen einer neuen Charge unterstützt wird.

Gemäß einer weiteren Ausgestaltung der Erfindung ist ferner eine nicht dargestellte Steuereinheit vorgesehen, die mit der Entleerungspumpe und der Spülpumpe 21 in Verbindung steht, wobei die Steuereinheit beim Entleeren des Aufnahmebehälters 6 bzw. Abführen der Mischung 10 aus dem Aufnahmebehälter 6 zum gleichzeitigen Betrieb der Entleerungspumpe und der Spülpumpe 21 ausgebildet ist. Auf diese Weise können etwaige Sedimente/Ablagerung während des Entleerungsvorganges vom Boden angehoben werden, sodass eine besonders effiziente/vollständige Entleerung ermöglicht wird.

## Patentansprüche

1. Trocknungsvorrichtung für eine Mischung (10) aus einer Flüssigkeit und einem oder mehreren Feststoffen mit
- einem Gestell (1),
- einem im Gestell (1) angeordneten Aufnahmebehälter (6), der einen Einlass (8) und einen Auslass (9) für die Mischung (10) aufweist,
- einem am Gestell (1) rotierbar gelagerten und mit einem Abschnitt seines Umfangs in dem Aufnahmebehälter (6) angeordneten Rotor (2), der eine Mehrzahl von flächigen Mitnahmeelementen (15) aufweist,
- einer Antriebsvorrichtung (3) zum rotierenden Antreiben des Rotors (2) um eine Rotationsachse (5),
**dadurch gekennzeichnet, dass** eine außerhalb des Aufnahmebehälters (6) angeordnete und mit dem Aufnahmebehälter (6) in Verbindung stehende Spülleitung (16) zum Zirkulieren der Mischung (10) vorgesehen ist.

2. Trocknungsvorrichtung gemäß Anspruch 1, **dadurch gekennzeichnet, dass** die Spülleitung (16) über den Einlass (8) und den Auslass (9) des Aufnahmebehälters (6) an den Aufnahmebehälters (6) angeschlossen ist.

3. Trocknungsvorrichtung gemäß Anspruch 1, **dadurch gekennzeichnet, dass** an die Spülleitung (16) eine Spülpumpe (21) zum Zirkulieren der Mischung (10) angeschlossen ist.

4. Trocknungsvorrichtung gemäß Anspruch 1, **dadurch gekennzeichnet, dass** der Einlass (8) und der Auslass (9) im Bodenbereich an zwei gegenüberliegenden Begrenzungswänden (7) des Aufnahmebehälters (6) angeordnet sind.

5. Trocknungsvorrichtung gemäß Anspruch 1, **dadurch gekennzeichnet, dass** die Spülpumpe (21) im Bereich des Auslasses (9) an die Spülleitung (16) angeschlossen ist.

6. Trocknungsvorrichtung gemäß Anspruch 1, **dadurch gekennzeichnet, dass** am Einlass (8) ein Einlassstutzen (17) zum Zuführen der Mischung (10) in den Aufnahmebehälter (6) und am Auslass (9) ein Auslassstutzen (18) zum Abführen der Mischung (10) aus dem Aufnahmebehälter vorgesehen sind, wobei die Spülleitung im Bereich des Auslassstutzen (6) abzweigt und im Bereich des Einlassstutzen (17) wieder einmündet.

7. Trocknungsvorrichtung gemäß Anspruch 6, **dadurch gekennzeichnet, dass** der Einlassstutzen (17) in Zuführrichtung der Mischung (10) vor der Einmündung der Spülleitung (16) mit einem ersten Absperrorgan (19) und der Auslassstutzen (18) in Abführrichtung der Mischung (10) nach der Abzweigung der Spülleitung (16) mit einem zweiten Absperrorgan (20) versehen sind.

8. Trocknungsvorrichtung gemäß Anspruch 2, **dadurch gekennzeichnet, dass** eine Entleerungspumpe zum Abführen der Mischung (10) aus dem Aufnahmebehälter (6) vorgesehen ist und ferner eine Steuereinheit mit der Entleerungspumpe und der Spülpumpe (21) in Verbindung steht, wobei die Steuereinheit beim Abführen der Mischung (10) aus dem Aufnahmebehälter (6) zum gleichzeitigen Betrieb der Entleerungspumpe und der Spülpumpe ausgebildet ist.
